# EUROPEAN PATENT APPLICATION

(11) **EP 4 811 191 A1**
(43) Date of publication of application: **23.09.2026**
(21) Application number: 26165357.0
(22) Date of filing: 17.03.2026
(51) Int. Cl.: G06F 21/54, G06F 21/55, G06F 21/62, H04L 9/00

(54) **ATTACK RESISTANT NOISE GENERATION IN DIFFERENTIAL PRIVACY**

(30) Priority: 17.03.2025 US 202519081681
(71) Applicant: Beijing Zitiao Network Technology Co., Ltd., Beijing 100190 (CN)
(72) Inventor: Wu, Xing, Beijing, 100028 (CN); Wang, Li, Beijing, 100028 (CN); Yan, Qiang, Beijing, 100028 (CN)
(74) Representative: Grünecker Patent- und Rechtsanwälte PartG mbB

(57) **Abstract**

The present disclosure involves methods (200), apparatus, and systems (100, 300) for multi-layer noise generation in differential privacy (DP). This can include identifying (202) an SQL query; performing (206) an SQL rewrite of the SQL query by replacing at least one process with a DP process; executing (208) the SQL query, and while executing the SQL query injecting noise during the DP process by: generating (210A) random noise; generating (210B, 210C) fixed noise; combining (210D), as combined noise, the random noise and the fixed noise in a weighted sum; and injecting the combined noise during the DP process.

## Description

### TECHNICAL FIELD

The present disclosure generally relates to generating and using noise in a differentially private SQL query.

### BACKGROUND

Differential privacy (DP) is a framework for releasing statistical information about datasets while protecting the privacy of individual data subjects. DP enables a data holder to share aggregate patterns of a group while limiting information that is leaked about specific individuals. This can be done by injecting noise into statistical computations, such that the utility of the statistic is preserved while provably limiting what can be inferred about any individual in the dataset.

### SUMMARY

The present disclosure relates to a method, system, and computer-readable storage media for multi-layer noise generation in differential privacy (DP). This can include identifying an SQL query; performing an SQL rewrite of the SQL query by replacing at least one process with a DP process; executing the SQL query, and while executing the SQL query injecting noise during the DP process by: generating random noise; generating fixed noise; combining, as combined noise, the random noise and the fixed noise in a weighted sum; and injecting the combined noise during the DP process.

Implementations can optionally include one or more of the following features.

In some instances, the random noise is at least one of: Gaussian noise, or Laplace noise.

In some instances, the fixed noise includes fixed noise that is based on a real result of a non-noisy process.

In some instances, the fixed noise comprises fixed noise that is based on a structure of the at least one process.

In some instances, the structure of the at least one process is based on an aggregation function to be performed, and a source table on which the aggregation function is to be performed.

In some instances, the fixed noise comprises fixed noise that is based on a real result of a non-noisy process and fixed noise that is based on a structure of the at least one process.

In some instances, generating fixed noise includes: selecting, as a selected input seed, an input seed based on the SQL query; and using the selected input seed to generate the fixed noise.

According to a second aspect, one or more computer-readable storage media is provided. The one or more computer-readable storage media stores one or more instructions that, when executable by one or more computers, cause the one or more computers to perform the method according to the first aspect or one or more implementations of the first aspect.

According to a third aspect, a computer-implemented system is provided. The computer-implemented system includes one or more computers and one or more computer memory devices interoperably coupled with the one or more computers. The one or more computer memory devices have computer-readable storage media storing one or more instructions that, when executed by the one or more computers, perform the method according to the first aspect or one or more implementations of the first aspect.

While generally described as computer-implemented software embodied on tangible media that processes and transforms the respective data, some or all of the aspects can be computer-implemented methods or further included in respective systems or other devices for performing this described functionality. The details of these and other aspects and implementations of the present disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 illustrates a block diagram of an example system for multi-layer noise generation in DP.
FIG. 2 is a flowchart illustrating an example process for identifying operations to SQL rewrite.
FIG. 3 illustrates a schematic diagram of an example computing system.

Like reference numbers and designations in the various drawings indicate like elements.

### DETAILED DESCRIPTION

This specification relates to methods, apparatuses, and systems for noise generation during structured query language (SQL) rewrite. Differential privacy (DP) is a technology for the protection of aggregation results to reduce risk of re-identifying user data. One way to implement DP in a query system is to replace original SQLs with DP SQLs (i.e., "SQL rewrite"). One important step is to change original SQL aggregation functions to DP versions of the aggregation functions. For example, replace "sum" with "DP_sum", replace "count" with "DP_count", etc. These DP functions generally have two input parameters. One is the real result, calculated by the original aggregation function. The other is sensitivity, or the maximum change in a query result caused by the addition or removal of a single individual's data.

One challenge is that DP techniques can be vulnerable to privacy leakage using averaging attacks. That is, the noise injected in conventional DP algorithms is a zero-mean noise (e.g., a Gaussian or Laplace noise). If an attacker submits a large enough quantity of identical or similar queries, and averages the results, the noise will average to zero, and the attacker may get access to real results.

A conventional approach of defending against averaging attacks include using a cache mechanism to store results. Then, for the same SQL queries, noise is generated on the first query and the result is cached. For subsequent, identical queries, the cached data is fetched as the return result. One weakness of this conventional approach is that attackers can construct different but logically equivalent SQL queries to bypass this caching defense mechanism. The disclosed solution is advantageous in that even logically similar queries will yield different noise, which cannot be averaged to zero.

Another conventional approach of defending against averaging attacks is to set a privacy budget. The privacy budget is a tool in DP to bound the privacy leakage risk. A limited privacy budget means attackers can only launch a limited number of queries, or in some instances, a limited scope of queries, or both. However, for many applications, this does not work, as single entities performing many queries can be a design requirement.

In the present disclosure, a multi-layer noise generation system is used, that provides non-zero average noise for resistance to averaging attacks, does not require a limited privacy budget, does not return identical noise to repeat queries, and cannot be bypassed by logically similar queries.

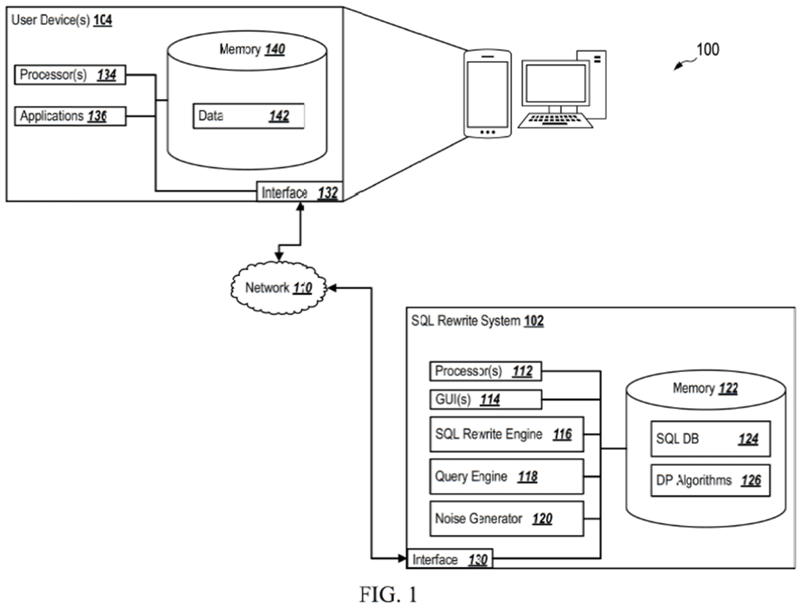

FIG. 1 illustrates a block diagram of an example system 100 for multi-layer noise generation in DP. The system 100 includes a SQL rewrite system 102, and one or more user devices 104, which can communicate using a network 110.

Network 110 facilitates wireless or wireline communications between the components of the system 100 (e.g., between the SQL rewrite system 102, and the user devices 104), as well as with any other local or remote computers, such as additional mobile devices, clients, servers, or other devices communicably coupled to network 110, including those not illustrated in FIG. 1. In the illustrated environment, the network 110 is depicted as a single network, but can comprise more than one network without departing from the scope of this disclosure, so long as at least a portion of the network 110 can facilitate communications between senders and recipients. In some instances, one or more of the illustrated components (e.g., the SQL database 124 and the memory 122) can be included within or deployed to network 110 or a portion thereof as one or more cloud-based services or operations. The network 110 can be all or a portion of an enterprise or secured network, while in another instance, at least a portion of the network 110 can represent a connection to the Internet. In some instances, a portion of the network 110 can be a virtual private network (VPN). Further, all or a portion of the network 110 can comprise either a wireline or wireless link. Example wireless links can include 802.11a/b/g/n/ac, 802.20, WiMax, LTE, and/or any other appropriate wireless link. In other words, the network 110 encompasses any internal or external network, networks, sub-network, or combination thereof operable to facilitate communications between various computing components inside and outside the illustrated system 100. The network 110 can communicate, for example, Internet Protocol (IP) packets, Frame Relay frames, Asynchronous Transfer Mode (ATM) cells, voice, video, data, and other suitable information between network addresses. The network 110 can also include one or more local area networks (LANs), radio access networks (RANs), metropolitan area networks (MANs), wide area networks (WANs), all or a portion of the Internet, and/or any other communication system or systems at one or more locations.

The SQL rewrite system 102 can be a server- or web-based system that enables querying and access to one or more databases (e.g., SQL database 124) by one or more user devices 104. However, the SQL rewrite system 102 can introduce noise using DP algorithms 126 and noise generator 120 to query responses, ensuring privacy of the data owners (or users) within the SQL database 124. The SQL rewrite system 102 can include one or more processors 112, graphical user interfaces (GUIs) 114, a SQL rewrite engine 116, a query engine 118, and a memory 122 storing a SQL database 124 and one or more DP algorithms 126.

Each of the one or more processors 112 can be a central processing unit (CPU), an application specific integrated circuit (ASIC), a field-programmable gate array (FPGA), or another suitable component. Generally, the processor 112 executes instructions and manipulates data to perform the operations of the SQL rewrite system 102. Specifically, the processor 112 executes the algorithms and operations described in the illustrated figures, as well as the various software modules and functionality, including the functionality for sending communications to and receiving transmissions from the user devices 104, as well as to other devices and systems. Each processor 112 can have a single or multiple cores, with each core available to host and execute an individual processing thread. Further, the number of, types of, and particular processors 112 used to execute the operations described herein can be dynamically determined based on a number of requests, interactions, and operations associated with the SQL rewrite system 102.

Regardless of the particular implementation, "software" includes computer-readable instructions, firmware, wired and/or programmed hardware, or any combination thereof on a tangible medium (transitory or non-transitory, as appropriate) operable when executed to perform at least the processes and operations described herein. In fact, each software component can be fully or partially written or described in any appropriate computer language including C, C++, JavaScript, Java^{™}, Visual Basic, assembler, Perl^{®}, any suitable version of fourth-generation programming language (4GL), as well as others.

GUI 114 of the SQL rewrite system 102 interfaces with at least a portion of the system 100 for any suitable purpose, including generating a visual representation of any particular application or results and/or the content associated with any components of the user devices 104. In particular, the GUI 114 can be used to present results of a query or search, or allow a developer to input queries or prompts to the SQL rewrite system 102, as well as to otherwise interact and present information associated with one or more applications. GUI 114 can also be used to view and interact with various web pages, applications, and web services located local or external to the SQL rewrite system 102. Generally, the GUI 114 provides the user with an efficient and user-friendly presentation of data provided by or communicated within the system. The GUI 114 can include a plurality of customizable frames or views having interactive fields, pull-down lists, and buttons operated by the user. In general, the GUI 114 is often configurable, supports a combination of tables and graphs (e.g., bar, line, pie, and/or status dials), and is able to build real time portals, application windows, and presentations. Therefore, the GUI 114 contemplates any suitable GUI, such as a combination of a generic web browser, a web-enabled application, intelligent engine, and command line interface (CLI) that processes information in the platform and efficiently presents the results to the user visually.

Memory 122 can represent a single memory or multiple memories. The memory 122 can include any memory or database module and can take the form of volatile or non-volatile memory including, without limitation, magnetic media, optical media, random access memory (RAM), read-only memory (ROM), removable media, or any other suitable local or remote memory component. The memory 122 can store various objects or data, including digital asset data, public keys, user and/or account information, administrative settings, password information, caches, applications, backup data, repositories storing business and/or dynamic information, and any other appropriate information associated with the SQL rewrite system 102, including any parameters, variables, algorithms, instructions, rules, constraints, or references thereto. Additionally, the memory 122 can store any other appropriate data, such as SQL database 124, user profiles, algorithms, or processes (e.g., DP algorithms 126), firmware logs and policies, firewall policies, a security or access log, print or other reporting files, as well as others. While illustrated within the system 100, memory 122 or any portion thereof, including some or all of the particular illustrated components, can be located remote from the system 100 in some instances, including as a cloud application or repository or as a separate cloud application or repository when the system 100 itself is a cloud-based system.

The SQL rewrite engine 116 can be used to ensure privacy of queries outputs. In general, the SQL rewrite engine 116 can receive queries (e.g., from query engine 118) and rewrite the query or portions of the query in a manner that utilizes DP. In general, a normal SQL query is received, it can be executed on the SQL database 124 to yield a result, and then the result is processed using a DP algorithm before it is returned. However, in order to provide the correct input parameters to the DP algorithm, ensuring user privacy is maintained, the SQL rewrite engine 116 must determine the allowable sensitivity for the queried data. In some implementations, the SQL rewrite engine 116 accesses a repository of DP algorithms 126 when rewriting SQL. In some instances, these algorithms 126 can be updated periodically, or are selected based on the input query being rewritten.

Query engine 118 can be used by a user device 104, via one or more graphical user interfaces 114. In general, the query engine 118 can take inputs from the user devices 104 and generate SQL formatted queries for information from the SQL database 124. In some implementations, the query engine 118 limits queries to aggregate data or limits each user or user device 104 to a predetermined number of queries or query rate (e.g., queries per hour, queries per day, etc.). That is, user devices 104 are not permitted to query specific fields or rows of data, and are permitted only to make certain queries (e.g., "mean( )", "sum( )", "count( )", or other general queries). The query engine 118, when executing a query, can use noise generator 120 to inject noise according to the selected DP algorithms 126 in order to ensure individual privacy is maintained for users within the SQL database 124.

The SQL database 124 can store data including tables and entries in a SQL format. Additionally, the SQL database 124 can be routinely updated, modified, or queried by a number of user devices 104. In some implementations, SQL database 124 can store sensitive user information, and as such user devices 104 need to perform aggregate queries of the SQL database 124 without being able to reveal private information about any users.

The noise generator 120 can be used to generate noise for injection in DP processes. This noise can be broadly assigned to two categories: 1) random, and 2) fixed or pseudo-random. Random noise is data that is unpredictable and lacks any discernible pattern or structure. It's truly random, meaning its values are generated by a process that is inherently stochastic. Random noise can be modeled or generated as a sequence of values drawn from a probability distribution (e.g., Gaussian or Laplace), where each value is independent of the others. Pseudorandom noise is data that is not truly random but appears or behaves random. Pseudorandom noise can be generated deterministically by an algorithm or a mathematical formula and mimics the statistical properties of random noise. Because it's deterministic, a known starting point or "seed" and the algorithm can be used to reproduce the exact same sequence of "random" values. Common pseudorandom number generators include a Mersenne Twister, or Linear Congruential Generator.

The noise generator 120 can generate random noise, for example, by harnessing unpredictable physical processes as an entropy source. For example, the noise generator 120 can include a sensor or sensors that measure thermal noise within an electronic circuit and amplify or change it.

The noise generator 120 can generate fixed or pseudorandom noise using an algorithm and selecting a seed based on the input SQL query, the real results of that query, or a combination of both.

Finally, a combination of random and pseudorandom noise can be used in the DP algorithms to make an averaging attack resistant DP database. In some implementations, the random and pseudorandom noises are summed together using a weighted sum in order to generate the total noise to be used.

Interface 130 is used by the SQL rewrite system 102 to communicate with other systems in a distributed environment - including within the system 100 - connected to the network 110 (e.g., user devices 104, and other systems communicably coupled to the illustrated SQL rewrite system 102 and/or network 110. Generally, the interface 130 includes logic encoded in software and/or hardware in a suitable combination and operable to communicate with the network 110 and other components. More specifically, the interface 130 can include software supporting one or more communication protocols associated with communications such that the network 110 and/or interface's 130 hardware is operable to communicate physical signals within and outside of the illustrated system 100. Still further, the interface 130 can allow the SQL rewrite system 102 to communicate with the user devices 104, and/or other portions illustrated within the system 100 to perform the operations described herein.

User devices 104 can be computing devices or computers used by one or more users and developers of the software and hardware within system 100. For example, the user devices 104 can interact with the SQL rewrite system 102 to request generation of new aggregates or run a particular query within the SQL database 124. As used in the present disclosure, the term "computer" or "computing devices" is intended to encompass any suitable processing device. For example, the user devices 104 can be any computer or processing device such as, for example, a blade server, general-purpose personal computer (PC), Mac^{®} workstation, UNIX-based workstation, or any other suitable device. In other words, the present disclosure contemplates computers other than general-purpose computers, as well as computers without conventional operating systems. The user devices 104, in some instances, can be desktop systems, a client terminal, or any other suitable device, including a mobile device, such as a smartphone, tablet, smartwatch, or any other mobile computing device. In general, each illustrated component can be adapted to execute any suitable operating system, including Linux, UNIX, Windows, Mac OS^{®}, Java^{™}, Android^{™}, Windows Phone OS, or iOS^{™}, among others. The user devices 104 can include one or more specific applications 136 executing on the user devices 104, or the user devices 104 can include one or more Web browsers or web applications that can interact with particular applications executing remotely from the user devices 104. User devices 104 can include a memory 140, which can be similar to or different from memory 122 and can store device data 142. The user devices 104 can include an interface 132 which enables communication with other components of system 100, and can be similar to interface 130.

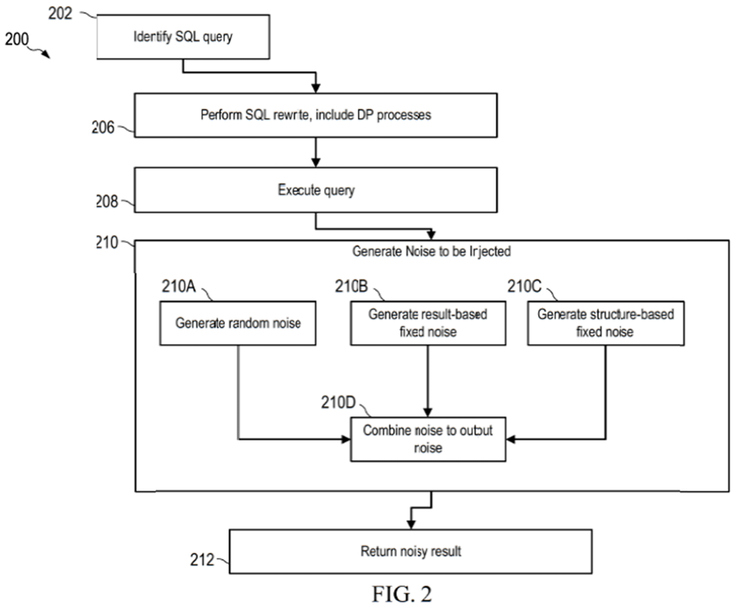

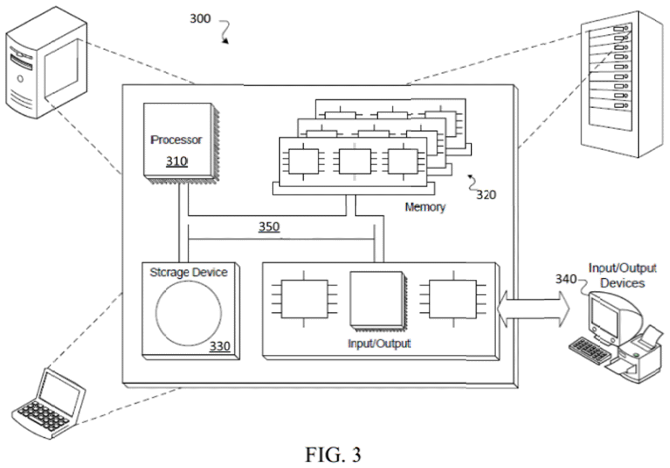

FIG. 2 is a flowchart illustrating an example process 200 for identifying operations to SQL rewrite. The example process 200 can be performed by a system for example, system 100 as described above with respect to FIG. 1. The operations shown in process 200 may not be exhaustive and other operations can be performed as well before, after, or in between any of the illustrated operations. Further, some of the operations may be performed simultaneously, or in a different order than shown in FIG. 2. In some implementations, some of the operations may be performed by a computer, or multiple computers. The one or more computers the process 200 will be described as being performed by a system of, located in one or more locations, and programmed appropriately in accordance with this specification. For example, one or more of a computation system 300 of FIG. 3, appropriately programmed, can perform the process 200.

At 202, a SQL query is identified. This can be a query from a user device (e.g., user device 104 of FIG. 1), and can request certain information from one or more tables in a SQL database. For example, the SQL query can request the average birthdate for users meeting certain conditions (e.g., users who have a particular medical condition. In some implementations, the SQL query is a complex query, requiring multiple sequential operations and, in some instances, multiple source tables to execute.

At 206, the SQL query, or a portion thereof is rewritten. The rewrite engine will rewrite a process with a DP version of that process, ensuring differential privacy in the query result. The DP versions of the process involve adding noise or perturbing the data in a controlled way, making it difficult to infer individual records or attributes while maintaining the value of the query output. Noise injection can be achieved through techniques such as adding Laplace noise to numerical values, swapping values within a small range, or using k-anonymity to group similar records together. The rewrite process aims to balance the need for data privacy with the utility of the query results, ensuring that the modified query still provides meaningful insights while minimizing the risk of privacy breaches.

At 208, the rewritten query is executed against the SQL database. The query engine will pull the required source tables from the SQL database and generate a result, also known as the real result, or the non-noisy result.

At 210, Using the non-noisy or real result, noise to be injected into the result is generated. Multiple layers of noise can be generated and combined to yield an output noise. In some implementations, all three of the noises described below (210A-C) are generated and combined. In some implementations, only two of these noises are used.

At 210A, random noise is generated. This noise can be truly random, or otherwise non-repeating, such that even an identical query under the same conditions will yield a different result. In some implementations, the random noise is generated based on a Gaussian distribution, or a Laplace distribution.

At 210B, result-based, fixed noise is generated. In general, this noise will be the same each time the same user queries the database to get the same result. In this manner, the noise generated at 210B prevents an averaging attack where the attacker lodges a multitude of different, but logically similar queries to try to get similar results. This result-based noise can be generated, for example, by selecting a seed that will be identical for a given user or querier, and result. For example, the seed can be set as a hash of a root seed assigned to that user or querier, the real result, and a sensitivity selected for the DP algorithm. Each of these terms will remain the same as long as the result, the user, and the DP algorithm do not change. Therefore, the seed, and thus the generated noise will also remain the same.

At 210C, structure-based, fixed noise is generated. This noise generally will remain fixed so long as the query, queried table, and user remain the same. In other words, the structure-based, fixed noise will prevent an averaging attack where the user's query is semantically unchanged. The structure-based noise can be generated similarly to the result-based noise, except that the seed can be a set as a hash of a root seed and a structure. The structure can be selected as a combination of the aggregation function being used and the source table it is being used on. For example, if the query is select count(1) from table_A where date = '202412021', the structure information would be (count,table_A).

At 210D, the generated noises are combined to yield a single output noise. In some implementations, each noise is weighted (e.g., as a portion of 1.00 so the sum of the weights adds to 1.00). The output noise can be generated as the sum of the weighted noises. For example,

*Output Noise = weight*₁ ** noise*₁ *+ weight*₂ ** noise*₂ *+ weight*₃ ** noise*₃ where *weight*₁ *+ weight*₂ *+ weight*₃ = 1. It should be noted that other common integration or combination techniques are possible and considered within the scope of this disclosure. For example, root mean square methods, multiplicative methods, or other techniques can be used to combine the generated noises.

At 212, the output noise is injected into the result, and the noisy result of the SQL query is returned to the user.

The following are some example averaging attacks, and how they are inhibited by the disclosed solution.

Example 1, an attacker launches an SQL query: "select count(1) from table_A where date = '20241202'" many times. In each run, the random generated noise (210A above) will be different with a mean of zero, but the result-based noise (210B) will be the same because the root seed, real result, and sensitivity are the same. Additionally, the structure-based noise (210C) will remain the same because the root seed, aggregation function, and source table remain the same. Because the result-based and structure-based noise remain the same with each query, the attacker will be unable to average the results and get a real result.

Example 2, an attacker launches a series of SQL queries: "select count(1) from table_A where date = '202041201 and OS!={{os}}". Then, in each different query, the attacker changes {{os}} to a different, unreasonable value, which changes the query but ensures the semantics of the query are the same. (For example, any values other than 'Android' and 'iOS' could be considered unreasonable values, and the attacker could use values ab, ac, ad, ae, etc.). In this example, as in the previous example, the random generated noise will change, but the result-based and the structure-based noise will remain the same. Similarly, the attacker will be unable to average the results and get a real result.

Example 3, an attacker launches a series of SQL queries: "select count(1) + {{k}} from table_A where date = '20241201 '''. In each subsequent query, the attacker can change {{k}} to a different integer (e.g., 1, 2 ,3 etc.). In this instance, the random noise and the results-based noise will change every run, however, because the aggregation function and source table are the same, the structure-based noise will not change, and thus the attacker will not be able to average out the structure-based noise and determine the real result.

Example 4, the attacker launches different queries intended to achieve the same result. For example "select sum(1) from table_A" and "select count(1) from table_A" etc. In this instance, the structure-based noise will change, because the aggregation function used is different. The result-based noise, however, will remain the same, and so the attacker will be unable to average out the result-based noise and determine the real result.

FIG. 3 illustrates a schematic diagram of an example computing system 300. The system 300 can be used for the operations described in association with the implementations described herein. For example, the system 300 may be included in computing devices of the one or more online components and/or the one or more offline components. The system 300 includes a processor 310, a memory 320, a storage device 330, and an input/output device 340, which are interconnected using a system bus 350. The processor 310 is capable of processing instructions for execution within the system 300. In some implementations, the processor 310 is a single-threaded processor. The processor 310 is a multi-threaded processor. The processor 310 is capable of processing instructions stored in the memory 320 or on the storage device 330 to display graphical information for a user interface on the input/output device 340.

The memory 320 stores information within the system 300. In some implementations, the memory 320 is a computer-readable medium. The memory 320 can be a volatile memory unit or a non-volatile memory unit. The storage device 330 is capable of providing mass storage for the system 300. The storage device 330 is a computer-readable medium. The storage device 330 may be a floppy disk device, a hard disk device, an optical disk device, or a tape device. The input/output device 340 provides input/output operations for the system 300. The input/output device 340 includes a keyboard and/or pointing device. The input/output device 340 includes a display unit for displaying graphical user interfaces.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random-access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship with each other. In some implementations, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of what may be claimed, but rather as descriptions of features that may be specific to particular implementations. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features may be described as acting in certain combinations and even initially claimed as such, one or more features from a claimed combination can, in some cases, be excised from the combination, and the claimed combination may be directed to a sub-combination or variation of a sub-combination.

As used in this disclosure, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, the phraseology or terminology employed in this disclosure, and not otherwise defined, is for the purpose of description only and not of limitation. Any use of section headings is intended to aid reading of the document and is not to be interpreted as limiting; information that is relevant to a section heading may occur within or outside of that particular section.

As used in this disclosure, the term "about" or "approximately" can allow for a degree of variability in a value or range, for example, within 10%, within 5%, or within 1% of a stated value or of a stated limit of a range.

As used in this disclosure, the term "substantially" refers to a majority of, or mostly, as in at least about 50%, 60%, 70%, 80%, 90%, 95%, 96%, 97%, 98%, 99%, 99.5%, 99.9%, 99.99%, or at least about 99.999% or more.

Values expressed in a range format should be interpreted in a flexible manner to include not only the numerical values explicitly recited as the limits of the range, but also the individual numerical values or sub-ranges encompassed within that range as if each numerical value and sub-range is explicitly recited. For example, a range of "0.1% to about 5%" or "0.1% to 5%" should be interpreted to include about 0.1% to about 5%, as well as the individual values (for example, 1%, 2%, 3%, and 4%) and the sub-ranges (for example, 0.1% to 0.5%, 1.1% to 2.2%, 3.3% to 4.4%) within the indicated range. The statement "X to Y" has the same meaning as "about X to about Y," unless indicated otherwise. Likewise, the statement "X, Y, or Z" has the same meaning as "about X, about Y, or about Z," unless indicated otherwise.

Particular implementations of the subject matter have been described. Other implementations, alterations, and permutations of the described implementations are within the scope of the following claims as will be apparent to those skilled in the art. While operations are depicted in the drawings or claims in a particular order, such operations are not required to be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the previously described implementations are not required in all implementations, and the described components and systems can generally be integrated together or packaged into multiple products.

Accordingly, the previously described example implementations do not define or constrain the present disclosure. Other changes, substitutions, and alterations are also possible.

The foregoing description of the specific implementations can be readily modified and/or adapted for various applications. Therefore, such adaptations and modifications are intended to be within the meaning and range of equivalents of the disclosed implementations, based on the teaching and guidance presented herein.

The breadth and scope of the present disclosure should not be limited by any of the above-described example implementations but should be defined only in accordance with the following claims and their equivalents. Accordingly, other implementations also are within the scope of the claims.

## Claims

1. A computer-implemented method (200), comprising:
identifying (202) an SQL query;
performing (206) an SQL rewrite of the SQL query by replacing at least one process with a DP process;
executing (208) the SQL query, and while executing the SQL query injecting noise during the DP process by:
generating (210A) random noise;
generating (210B, 210C) fixed noise;
combining (210D), as combined noise, the random noise and the fixed noise in a weighted sum; and
injecting the combined noise during the DP process.

2. The method (200) of claim 1, wherein the random noise is at least one of: Gaussian noise, or Laplace noise.

3. The method (200) of claim 1, wherein the fixed noise comprises fixed noise that is based on a real result of a non-noisy process.

4. The method (200) of claim 1, wherein the fixed noise comprises fixed noise that is based on a structure of the at least one process.

5. The method (200) of claim 4, wherein the structure of the at least one process is based on an aggregation function to be performed, and a source table on which the aggregation function is to be performed.

6. The method (200) of claim 1, wherein the fixed noise comprises fixed noise that is based on a real result of a non-noisy process and fixed noise that is based on a structure of the at least one process.

7. The method (200) of claim 1, wherein generating fixed noise comprises:
selecting, as a selected input seed, an input seed based on the SQL query; and
using the selected input seed to generate the fixed noise.

8. One or more computer-readable storage medium (320, 330) storing one or more instructions that, when executable by one or more computers, cause the one or more computers to perform operations comprising:
identifying (202) an SQL query;
performing (206) an SQL rewrite of the SQL query by replacing at least one process with a DP process;
executing (208) the SQL query, and while executing the SQL query injecting noise during the DP process by:
generating (210A) random noise;
generating (210B, 210C) fixed noise;
combining(210D), as combined noise, the random noise and the fixed noise in a weighted sum; and
injecting the combined noise during the DP process.

9. The medium (320, 330) of claim 8, wherein the random noise is at least one of: Gaussian noise, or Laplace noise.

10. The medium (320, 330) of claim 8, wherein the fixed noise comprises fixed noise that is based on a real result of a non-noisy process.

11. The medium (320, 330) of claim 8, wherein the fixed noise comprises fixed noise that is based on a structure of the at least one process.

12. The medium (320, 330) of claim 11, wherein the structure of the at least one process is based on an aggregation function to be performed, and a source table on which the aggregation function is to be performed.

13. The medium (320, 330) of claim 8, wherein the fixed noise comprises fixed noise that is based on a real result of a non-noisy process and fixed noise that is based on a structure of the at least one process.

14. The medium (320, 330) of claim 8, wherein generating fixed noise comprises:
selecting, as a selected input seed, an input seed based on the SQL query; and
using the selected input seed to generate the fixed noise.

15. A computer-implemented system (100, 300), comprising:
one or more computers; and
one or more computer memory devices interoperably coupled with the one or more computers and having computer-readable storage media storing one or more instructions that, when executed by the one or more computers, perform the method of any of claims 1-7.
